Europäisches Patentamt

European Patent Office

Office européen des brevets

(11) Veröffentlichungsnummer: **0 456 985 A2**

## (12) EUROPÄISCHE PATENTANMELDUNG

(21) Anmeldenummer: 91103824.8

(22) Anmeldetag: 13.03.91

(51) Int. Cl.⁵: **B60D 1/52**

(30) Priorität: 12.05.90 DE 4015262

(43) Veröffentlichungstag der Anmeldung:
21.11.91 Patentblatt 91/47

(84) Benannte Vertragsstaaten:
DE ES FR GB IT NL

(71) Anmelder: AL-KO KOBER AG
Ichenhauser Strasse 14
W-8871 Kötz 2(DE)

(72) Erfinder: **Korger, Heinz, Dipl.-Ing.**
**Drosselweg 7**
**W-7908 Niederstotzingen(DE)**

(74) Vertreter: **Ernicke, Hans-Dieter, Dipl.-Ing. et al**
**Patentanwälte Dipl.-Ing. H.-D. Ernicke**
**Dipl.-Ing. Klaus Ernicke Schwibbogenplatz**
**2b**
**W-8900 Augsburg(DE)**

(54) **Wechselbare Anhängerkupplung für Zugfahrzeuge.**

(57) Die Erfindung betrifft eine wechselbare Anhängerkupplung (1) für Zugfahrzeuge, bestehend aus zwei lösbaren Kupplungsteilen (2,3), von denen das eine fest mit dem Zugfahrzeug verbunden ist und das andere einen Kupplungskopf trägt. Die beiden Kupplungsteile (2,3) sind über eine keilförmige Nut- und Federverbindung miteinander formschlüssig und lösbar verbunden, wobei die Verbindung durch einen mit einem Kupplungsteil (2,3) gelagerten Verriege-lungsbolzen (12) mit einer Stellvorrichtung (17) gesichert ist. Der Verriegelungsbolzen (12) erstreckt sich längs der Verbindungsebene (9) zwischen den beiden Kupplungsteilen (2,3) mit vorzugsweise horizontaler Ausrichtung und besitzt eine Keilspitze (13), mit der er von der Seite her formschlüssig in eine Keilöffnung (15) am anderen Kupplungsteil (3,2) greift. Die Keilöffnung (15) ist muldenförmig ausgebildet und entgegen der Einsteckrichtung (30) vergrößert.

Fig 3

Die Erfindung betrifft eine wechselbare Anhängerkupplung für Zugfahrzeuge mit den Merkmalen im Oberbegriff des Hauptanspruchs.

Eine solche Anhängerkupplung ist aus der DE-OS 35 12 981 bekannt. Die beiden Kupplungsteile werden über eine keilförmige Nut- und Federverbindung formschlüssig ineinander gesteckt und in dieser Lage durch einen Verriegelungsbolzen gesichert, der quer zur Verbindungsebene zwischen den Kupplungsteilen ausgerichtet ist. Betätigt wird der Verriegelungsbolzen über einen Schieber mit einem schrägen Finger. Mittels eines Drehgriffes kann der Schieber gehoben und gesenkt werden, wodurch er mit seinem Finger gegen eine ebenfalls schräge Rückwand des Verriegelungsbolzens drückt und diesen durch die Verbindungsebene zwischen den Kupplungsteilen drückt bzw. zurückzieht.

Es ist Aufgabe der vorliegenden Erfindung, eine wechselbare Anhängerkupplung für Zugfahrzeuge aufzuzeigen, die eine noch bessere wackelfreie Verbindung der beiden Kupplungsteile aufweist, sich einfach bedienen läßt und kostengünstiger herstellbar ist.

Die Erfindung löst diese Aufgabe mit den Merkmalen im Hauptanspruch.

Der nunmehr längs der Verbindungsebene zwischen den beiden Kupplungsteilen ausgerichtete Verriegelungsbolzen hat eine bessere Kinematik und entwickelt in Verbindung mit der Keilspitze und der Keilöffnung günstigere Spannkräfte. Die beiden Kupplungsteile werden dadurch besser aneinander gehalten, wobei die Verbindung auch im Betrieb und nach längerer Benutzungszeit nicht wackelt. Die Bolzenkonstruktion bedingt außerdem einen geringeren Bauaufwand und ist kinematisch leichter beherrschbar. Dies erlaubt eine einfache Konstruktion der Stellvorrichtung, wodurch insgesamt die Fertigungskosten gesenkt werden können.

Besonders günstig ist es, wenn der Verriegelungsbolzen sich quer zur Einsteckrichtung erstreckt, in der die beiden Kupplungsteile zusammengefügt werden. Hierdurch werden die beiden Kupplungsteile an der gegenüberliegenden Keilführung der Nut- und Federverbindung fest und wackelfrei ineinander gepreßt. Dazu genügt es, wenn eine solche Keilführung oder Schwalbenschwanzführung nur auf der dem Verriegelungsbolzen gegenüberliegenden Seite vorhanden ist. An den anderen Seiten kann auch eine Hammerkopfführung vorhanden sein.

Der Verriegelungsbolzen kann wahlweise im festen oder im beweglichen Kupplungsteil angeordnet sein. In beiden Fällen empfiehlt es sich, den Verriegelungsbolzen in Höhe der Nut- und Federverbindung angreifen zu lassen, um dadurch eine direkte Krafteinwirkung auf die gegenüberliegende Keilführung zu erreichen. In diesem Fall kann die Keilöffnung auch lediglich muldenförmig ausgebildet sein, was den Fertigungsaufwand verringert. Die Keilöffnung ist ferner so vergrößert, daß der Verriegelungsbolzen entgegen der Einsteckrichtung keine Anlage findet und somit keine verbindungslösende Kraftkomponente besitzt.

Von der Kinematik und vom Platzbedarf her empfiehlt es sich, den Verriegelungsbolzen in der Grundplatte des festen Kupplungsteiles zu lagern und dann direkt am Nutboden der Nut- und Federverbindung münden zu lassen. Die Keilöffnung ist dann an der Gleitplatte des beweglichen Kupplungsteiles angeordnet und vorzugsweise muldenförmig gestaltet.

Aufgrund der Bolzenanordnung läßt sich die Stellvorrichtung besonders einfach gestalten und kommt mit einem Exzentergriff aus, der über einen Mitnehmer direkt am Verriegelungsbolzen angreift. Die Verriegelungsstellung kann durch eine Feder gesichert werden, die sich auf einfache Weise mit einer Hülse montieren und abstützen läßt.

Ferner kann ein beweglicher Sicherungsknopf vorgesehen sein, der formschlüssig den Exzentergriff verriegelt und ein unbeabsichtigtes Lösen der Kupplung verhindert. Für eine kräfte- und handhabungsmäßig günstige Bedienung kann der Sicherungsknopf bei der Kupplungsmontage selbsttätig ausweichen und in der Einsteckstellung automatisch am Exzentergriff wieder einrasten. Zur Erhöhung der Bedienungsfreundlichkeit ist auch eine Anlaufschräge an der Gleitplatte vorgesehen, die beim Einstecken den Verriegelungsbolzen zurückschiebt. Der Bediener dadurch bei der Montage das bewegliche Kupplungsteil mit beiden Händen fassen und führen.

Die Erfindung ist in den Zeichnungen beispielsweise und schematisch dargestellt. Im einzelnen zeigen

Fig. 1: die wechselbare Anhängerkupplung in Seitenansicht,

Fig. 2: einen Schnitt durch den Anhängerkupplung gemäß Schnittlinie II - II von Fig. 1,

Fig. 3: eine Stirnansicht gemäß Pfeil III von Fig. 1,

Fig. 4: einen Längsschnitt gemäß Schnittlinie IV - IV von Fig. 2,

Fig. 5: eine Variante der Anhängerkupplung mit Selbstauslösung in Seitenansicht,

Fig. 6: eine Ansicht der Anhängerkupplung gemäß Pfeil VI von Fig. 5 und

Fig. 7: einen Schnitt durch die Anhängerkupplung gemäß Schnittlinie VII - VII von Fig. 5.

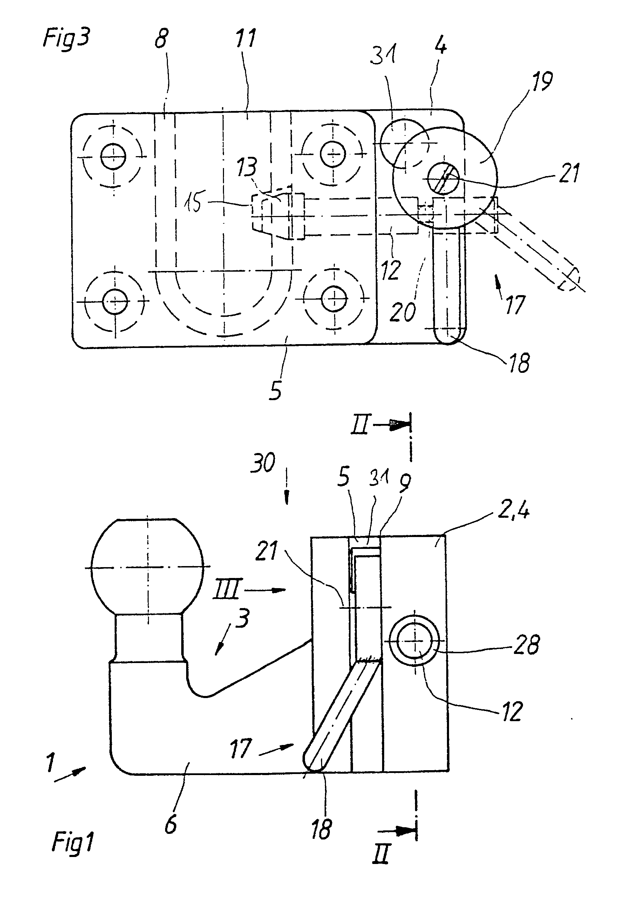

Fig. 1 zeigt eine wechselbare Anhängerkupplung (1) für Zugfahrzeuge in Seitenansicht. Sie besteht aus einem mit dem Zugfahrzeug verbundenen festen Kupplungsteil (2) und einem beweglichen

chen Kupplungsteil (3), das einen Kupplungskopf (6) aufweist und als Wechseleinsatz ausgebildet ist. Im gezeigten Ausführungsbeispiel ist der Kupplungskopf (6) als Kugelstange gestaltet, kann alternativ aber auch als Kupplungsmaul mit Steckbolzen oder dergleichen andere Weise ausgebildet sein. Durch die Ausbildung als Wechseleinsatz können diese Kupplungsformen nach Bedarf ausgetauscht werden.

Die beiden Kupplungsteile (2,3) werden bei der Montage formschlüssig ineinander gesteckt, was vorzugsweise von oben nach unten geschieht. In ihrer Lage werden sie durch einen Verriegelungsbolzen (12) gesichert, der durch eine Stellvorrichtung (17) vorgeschoben und zurückgezogen werden kann.

Das feste Kupplungsteil (2) besitzt eine Grundplatte (4), die an einem Querträger des Zugfahrzeugs oder an einer sonstigen geeigneten Stelle befestigt ist. Das bewegliche Kupplungsteil (3) besitzt eine dazu passende Gleitplatte (5), die mit dem Kupplungskopf (6) direkt oder über eine Flanschplatte (29) verbunden ist. Die Grundplatte (4) und die Gleitplatte (5) werden in der vorerwähnten Weise in der Einsteckrichtung (30) zusammengefügt und durch eine Nut- und Federverbindung (7) aneinander gehalten. Letztere besitzt eine Keilführung (8) bzw. eine Schwalbenschwanzführung, mit der das Federteil (11) und die hinterschnittene Aufnahmenut (10) ineinander greifen. Im gezeigten Ausführungsbeispiel ist das Federteil (11) der Gleitplatte (5) und die Aufnahmenut (10) der Grundplatte (4) zugeordnet. Diese Zuordnung kann auch umgedreht sein.

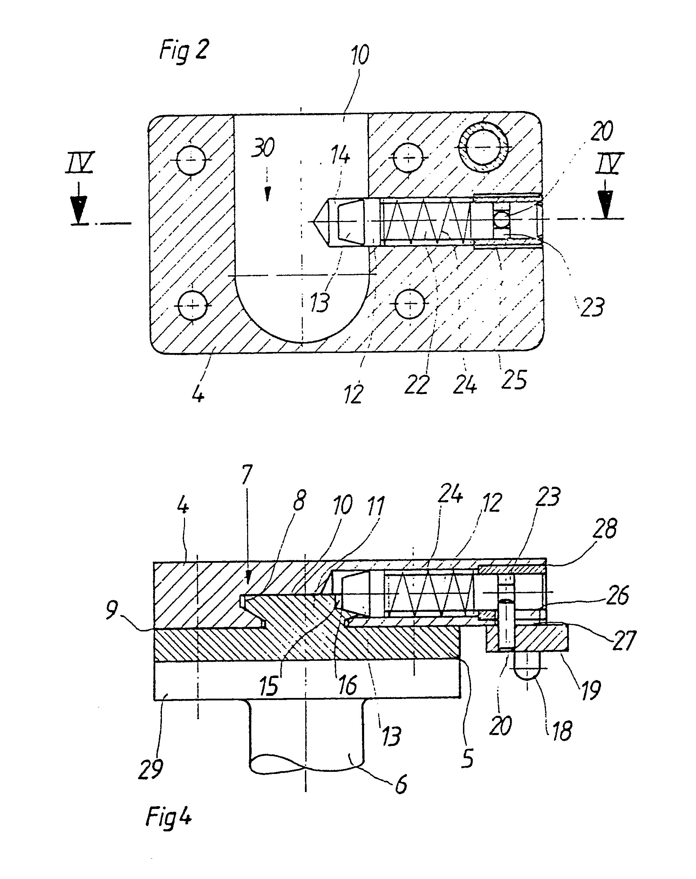

Wie Fig. 2 zeigt, ist die Aufnahmenut (10) U-förmig und bildet dadurch für die eingesteckte Gleitplatte (5) am unteren Rand eine feste Auflage. Der Verriegelungsbolzen (12) ist in einem Führungskanal (14) in der Grundplatte (4) längsverschieblich gelagert. Der Führungskanal (14) und der Verriegelungsbolzen (12) erstrecken sich dabei längs der Verbindungsebene (9), in der die Grundplatte (4) und die Gleitplatte (5) flächig aneinander liegen. Der Führungskanal (14) und der Verriegelungsbolzen (12) sind dabei quer zur Einsteckrichtung (30) ausgerichtet und etwa in halber Höhe der Aufnahmenut (10) angeordnet. Der Führungskanal (14) mündet seitlich an der Nut- und Federverbindung (7). Fig. 2 bis 4 zeigen diese Anordnung.

Im einzelnen sind der Führungskanal (14) und der Verriegelungsbolzen (12) mit ihrer Mittelachse längs der Bodenebene der Aufnahmenut (10) ausgerichtet. Der Führungskanal (14) reicht dabei ein Stück in die Aufnahmenut (10) hinein und bildet in diesem Bereich eine offene Rinne. Die Rinne ist lediglich mit Abstand durch die vorspringende schräge Wand der Keilführung (8) abgedeckt, die eine Seitenführung für den Verriegelungsbolzen (12) bildet (vgl. Fig. 4).

Der Verriegelungsbolzen (12) besitzt eine Keilspitze (13), die zumindest an deren zur Gleitplatte (5) weisenden Umfangshälfte eine nach vorn sich verjüngende Form hat. Im gezeigten Ausführungsbeispiel ist der Bolzenkopf als abgestumpfte Kegelspitze mit umlaufender Anschrägung ausgebildet. Im Bereich der Nut- und Federverbindung (7) drückt die Keilspitze (13) in eine Keilöffnung (15) am Federteil (11) bzw. der Gleitplatte (5). Die Keilöffnung (15) ist muldenförmig gestaltet und besitzt an der Seite und unten schräge Wände (16), die die gleiche Neigung wie die anliegende Keilspitze (13) haben. Nach oben hin ist die Keilöffnung (15) vergrößert, so daß in diesem Bereich kein Kontakt mit der Keilspitze (13) besteht.

Wenn der Verriegelungsbolzen (12) nach vorn in die Keilöffnung (15) geschoben wird, werden auf der gegenüberliegenden Seite die Teile der Keilführung (9) in Klemmschluß ineinander geschoben. Das Federteil (11) wird hierdurch sowohl nach der Seite, wie auch gegen den Boden der Aufnahmenut (10) gepreßt. Entgegen der Einsteckrichtung (30) wirkende Kraftkomponenten werden durch die Vergrößerung der Keilöffnung (15) vermieden. Die beiden Kupplungsteile (2,3) sind damit in der Nut- und Federverbindung (7) fest und wackelfrei miteinander verspannt.

Die Stellvorrichtung (17) besteht aus einem Exzentergriff (18), der eine Drehscheibe (19) mit einem Mitnehmer (20) aufweist. Die Drehscheibe (19) ist seitlich der Gleitplatte (5) auf der Front der Grundplatte (4) angeordnet und schwenkt um eine Drehachse (21), die in Querrichtung und oberhalb des Verriegelungsbolzens (12) verläuft. Der am Scheibenrand angeordnete Mitnehmer (20) greift durch eine Öffnung (27) in der Deckfläche der Grundplatte (4) und eine geschlitzte (26) Hülse (25) in eine Ausnehmung (23) am rückwärtigen Ende des Verriegelungsbolzens (12). Fig. 4 zeigt diese Anordnung.

Die Grundplatte (4) weist für die Montage des Verrieglungsbolzens (12) eine seitliche Bohrung (28) auf, in die die vorerwähnte Hülse (25) eingesetzt und mit ihrem Schlitz (26) lagegerecht fixiert, vorzugsweise eingeklebt ist. Der Verriegelungsbolzen (12) besitzt einen Bolzenschaft (22), der einen kleineren Durchmesser als der Bolzenkopf mit der Keilspitze (13) aufweist. Der Bolzenkopf ist an den Kanalwänden und der Bolzenschaft (22) am hinteren Ende in der Hülse (25) geführt. Zwischen dem Bolzenkopf und der Hülse (25) ist eine Druckfeder (24) eingespannt, die den Verriegelungsbolzen (12) in die Sperrstellung in der Keilöffnung (15) zu schieben trachtet.

Durch Drehung des Exzentergriffes (18) wird der am Rand der Drehscheibe (19) angeordnete Mitnehmer (20) hin und her geschwenkt und dadurch der Verriegelungsbolzen (12) vor- und zurückbewegt. Zum Lösen oder Einsetzen des beweglichen Kupplungsteils (3) wird der Verriegelungsbolzen (12) auf diese Weise gegen die Kraft der Feder (24) in die rückwärtige Freigabestellung bewegt, wie sie in Fig. 3 gestrichelt dargestellt ist. In dieser Stellung ragt das rückwärtige Ende des Verriegelungsbolzens (2) aus der Bohrung (28) nach außen vor. Das Kupplungsteil (3) kann nun ohne Behinderung gewechselt werden. Zur Verriegelung wird der ausgeschwenkte Exzentergriff (18) wieder losgelassen und die Feder (24) drückt den Verriegelungsbolzen (12) selbsttätig in die Sperrstellung und in Eingriff mit der Keilöffnung (15). Die beiden Kupplungsteile (2,3) sind dann wieder formschlüssig nach allen Seiten verriegelt und verspannt.

Zur weiteren Sicherung der Verriegelungsstellung ist ein beweglicher Sicherungsknopf (31) vorgesehen. Der Sicherungsknopf (31) ist in einer Bohrung (32) der Grundplatte (4) gleitend gelagert und wird von einer Feder (33) nach außen gedrückt. Er greift in Sperrstellung formschlüssig in eine Öffnung (40) an der Rückseite der Drehscheibe (19) und verhindert damit ein Drehen des Exzentergriffes (18).

Wie Fig. 7 verdeutlicht, besitzt der Sicherungsknopf (31) eine abgestufte zylindrische Grundform. Er weist einen vorstehenden Kopf (34) mit einem zur Drehscheibe (19) weisenden, zurückversetzten Absatz (35) auf. Die Kopfwand ist entsprechend der Drehscheibenkontur verrundet. Die Scheibenöffnung (40) ist ihrerseits an die Kontur des Absatzes (35) angepaßt.

In Sperrstellung greift der Absatz (35) in die Scheibenöffnung (40). Zum Lösen wird der Sicherungsknopf (31) eingedrückt, bis der Absatz (35) in der Bohrung (32) versenkt ist. Dann steht einer Schwenkbewegung des Exzentergriffes (18) und der Drehscheibe (19) nichts mehr im Wege. Durch die Feder (33) rastet der Sicherungsknopf nach dem Zurückschwenken in die Ausgangsstellung automatisch wieder an der Drehscheibe (19) ein.

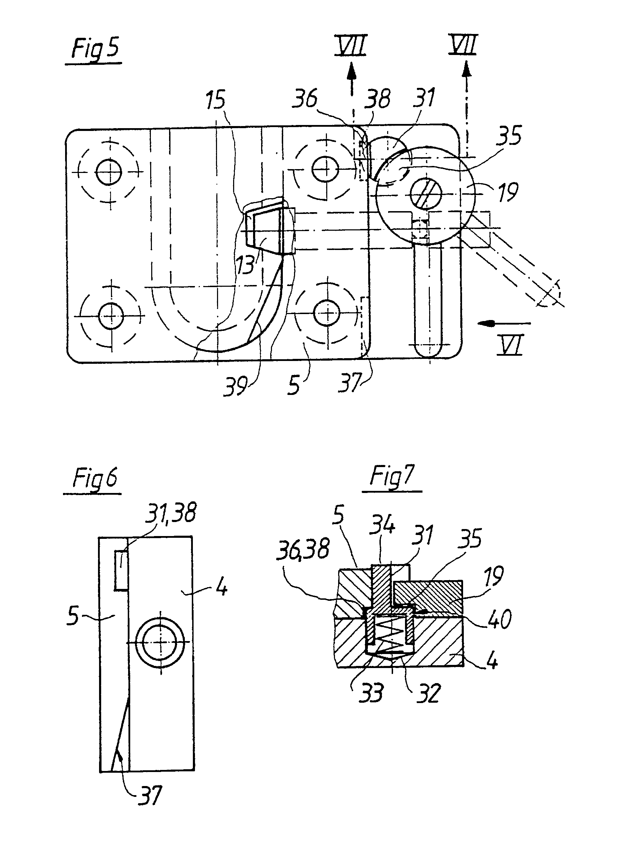

Fig. 5 zeigt eine automatisierte Variante der Anhängerkupplung (1), bei der bei der Montage automatisch der Sicherungsknopf (31) und der Verriegelungsbolzen (12) gelöst werden. Zu diesem Zweck weist das bewegliche Kupplungsteil (3), hier die Gleitplatte (5), an der dem Sicherungsknopf (31) zugewandten Seite vorn eine schräge Ausnehmung (37) und hinten eine Rastöffnung (38) auf. Der Sicherungsknopf (31) besitzt seinerseits eine gegenüber dem Kopf (34) gerade abgestufte Schulter (36). Beim Einstecken der Gleitplatte (5) gleitet die schräge Ausnehmung (37) auf der Schulter (36) auf und drückt den Sicherungsknopf (31) ein. Nachdem die Schulter (36) und der Absatz (35) auf gleicher Höhe liegen, wird zugleich die Drehscheibe (19) entriegelt. In der Einsteckstellung kommt dann die Rastöffnung (38) über der Schulter (36) zu liegen, so daß der Sicherungsknopf (31) wieder heraustreten kann, wenn auch die Drehscheibe (19) sich wieder in der mit durchgezogenen Linien gezeichneten Ausgangsstellung befindet. Die Schulter (36) greift dann formschlüssig verriegelnd in die Rastöffnung (38).

Wie Fig. 5 zeigt, besitzt das Federteil (11) der Gleitplatte (5) am Boden eine Anlaufschräge (39). Diese gleitet beim Einstecken auf der Keilspitze (13) des Verriegelungsbolzens (12) auf und drückt diesen unter Mitnahme der Drehscheibe (19) und des Exzentergriffs (18) zurück. Der Sicherungsknopf (31) ist zuvor durch die schräge Ausnehmung (37) gelöst worden. Der Verriegelungsbolzen (12) bleibt bis zum Erreichen der Einsteckstellung zurückgezogen und rastet dann selbsttätig in die Keilöffnung (15) ein, wobei auch der Sicherungsknopf (31) automatisch wieder verriegelt.

**STÜCKLISTE**

| | |
|---|---|
| 1 | wechselbare Anhängerkupplung |
| 2 | Kupplungsteil, fest |
| 3 | Kupplungsteil, beweglich, Wechseleinsatz |
| 4 | Grundplatte |
| 5 | Gleitplatte |
| 6 | Kupplungskopf, Kugelstange |
| 7 | Nut- und Federverbindung |
| 8 | Keilführung |
| 9 | Verbindungsebene |
| 10 | Aufnahmenut |
| 11 | Federteil |
| 12 | Verriegelungsbolzen |
| 13 | Keilspitze, Kegelspitze |
| 14 | Führungskanal |
| 15 | Keilöffnung |
| 16 | Wand |
| 17 | Stellvorrichtung |
| 18 | Exzentergriff |
| 19 | Drehscheibe |
| 20 | Mitnehmer, Stift |
| 21 | Drehachse |
| 22 | Bolzenschaft |
| 23 | Ausnehmung |
| 24 | Feder |
| 25 | Hülse |
| 26 | Schlitz |
| 27 | Öffnung |
| 28 | Bohrung |
| 29 | Flanschplatte |
| 30 | Einsteckrichtung |
| 31 | Sicherungsknopf |
| 32 | Bohrung |
| 33 | Feder |
| 34 | Kopf |
| 35 | Absatz |

36 Schulter
37 schräge Ausnehmung
38 Rastöffnung
39 Anlaufschräge
40 Scheibenöffnung

## Patentansprüche

1. Wechselbare Anhängerkupplung für Zugfahrzeuge, bestehend aus zwei lösbaren Kupplungsteilen, von denen das eine fest mit dem Zugfahrzeug verbunden ist und das andere einen Kupplungskopf trägt, wobei die beiden Kupplungsteile über eine keilförmige Nut- und Federverbindung miteinander formschlüssig und lösbar verbunden sind und die Verbindung durch einen beweglichen Verriegelungsbolzen mit einer Stellvorrichtung gesichert ist, dadurch **gekennzeichnet,** daß der in einem Kupplungsteil (2,3) gelagerte Verriegelungsbolzen (12) sich längs der Verbindungsebene (9) zwischen den beiden Kupplungsteilen (2,3) erstreckt und eine Keilspitze (13) aufweist, mit der er von der Seite her formschlüssig in eine Keilöffnung (15) am anderen Kupplungsteil (3,2) greift.

2. Anhängerkupplung nach Anspruch 1, dadurch **gekennzeichnet,** daß der Verriegelungsbolzen (12) sich quer zur Einsteckrichtung (30) der beiden Kupplungsteile (2,3) erstreckt.

3. Anhängerkupplung nach Anspruch 1 oder 2, dadurch **gekennzeichnet,** daß der Verriegelungsbolzen (12) in einem Führungskanal (14) gelagert ist, der an der Nut- und Federverbindung (7) mündet, wobei die Keilöffnung (15) muldenförmig ausgebildet ist.

4. Anhängerkupplung nach Anspruch 1, 2 oder 3, dadurch **gekennzeichnet,** daß die Keilöffnung (15) entgegen der Einsteckrichtung (30) vergrößert ist, so daß die Keilspitze (13) in Einsteckstellung dort nicht zur Anlage kommt.

5. Anhängerkupplung nach Anspruch 1, 2, 3 oder 4, dadurch **gekennzeichnet,** daß der Führungskanal (14) in einer mit dem Zugfahrzeug verbundenen Grundplatte (4) angeordnet ist und am Nutboden der Nut- und Federverbindung (7) verläuft, wobei die Keilöffnung (15) an einer Gleitplatte (5) des beweglichen Kupplungsteils (3) angeordnet ist.

6. Anhängerkupplung nach Anspruch 1 oder einem der folgenden, dadurch **gekennzeichnet,** daß die Gleitplatte (5) am unteren Ende seitlich eine mit dem Verriegelungsbolzen zusammenwirkende Anlaufschräge (39) aufweist.

7. Anhängerkupplung nach Anspruch 1 oder einem der folgenden, dadurch **gekennzeichnet,** daß die Stellvorrichtung (17) einen Exzentergriff (18) mit einem am Verriegelungsbolzen (12) angreifenden Mitnehmer (20) aufweist.

8. Anhängerkupplung nach Anspruch 7, dadurch **gekennzeichnet,** daß der Verriegelungsbolzen (12) am rückwärtigen Ende in einer Hülse (25) geführt ist, die einen Schlitz (26) für den Mitnehmer (20) aufweist.

9. Anhängerkupplung nach Anspruch 7 oder 8, dadurch **gekennzeichnet,** daß der Verriegelungsbolzen (12) von einer Feder (24) beaufschlagt ist.

10. Anhängerkupplung nach Anspruch 7, 8 oder 9, dadurch **gekennzeichnet,** daß die Stellvorrichtung (17) einen beweglichen Sicherungsknopf (31) aufweist, der formschlüssig verriegelt.

11. Anhängerkupplung nach Anspruch 10, dadurch **gekennzeichnet,** daß der Sicherungsknopf (31) versenkbar und federbelastet (33) in der Grundplatte (4) angeordnet ist und mit einem Absatz (35) formschlüssig in eine Öffnung (40) an der Drehscheibe (19) greift.

12. Anhängerkupplung nach Anspruch 10 oder 11, dadurch **gekennzeichnet,** daß der Sicherungsknopf (31) in die Bewegungsbahn der Gleitplatte (5) ragt, wobei die Gleitplatte (5) zur Betätigung des Sicherungsknopfes (31) eine schräge Ausnehmung (37) und eine Rastöffnung (38) aufweist.

Fig3

8  11  31  4  19

13  21

15

12  20

17

18

5

II

30

5  31  9

21  2,4

III

3

28

12

1

17

6  18

II

Fig1

Fig 2

Fig 4

Fig 5

Fig 6

Fig 7